# EUROPÄISCHE PATENTSCHRIFT

(11) **EP 2 982 904 B1**
(45) Veröffentlichungstag und Bekanntmachung des Hinweises auf die Patenterteilung: **13.09.2017**
(21) Anmeldenummer: 15174739.1
(22) Anmeldetag: 01.07.2015
(51) Int. Cl.: F21V 19/00, F21V 19/04, F21V 29/507, F21Y 115/10, F21K 9/20

(54) **LEUCHTE**
LUMINAIRE
LUMINAIRE

(30) Priorität: 06.08.2014 DE 102014215576
(43) Veröffentlichungstag der Anmeldung: 10.02.2016
(73) Patentinhaber: RIDI Leuchten GmbH, 72417 Jungingen (DE)
(72) Erfinder: Lebherz, Andreas, 72336 Balingen (DE); Mania, Dirk, 72379 Hechingen-Stetten (DE)
(74) Vertreter: BRP Renaud & Partner mbB Rechtsanwälte Patentanwälte Steuerberater

(56) Entgegenhaltungen:
- EP-A1- 0 897 255
- WO-A2-2013/028011
- CN-U- 203 442 630
- DE-A1- 19 817 080
- DE-U1-202007 016 981
- GB-A- 2 156 062

## Beschreibung

Die vorliegende Erfindung betrifft eine Leuchte zur Wand- oder Deckenmontage, mit den Merkmalen des Oberbegriffs des Anspruchs 1, wobei die Leuchte insbesondere als Aufbauleuchte konzipiert ist.

Derartige Leuchten können beispielsweise in Gewerbebetrieben, Einkaufszentren, Montagehallen, Lagerhallen und Sporthallen zum Einsatz kommen. Derartige Leuchten weisen üblicherweise zumindest eine stabförmige Lampe auf, die herkömmlicherweise als Leuchtstoffröhre ausgestaltet ist. In modernen Leuchten kommen vermehrt LED-Lampen zum Einsatz, die wenigstens eine mehrere LEDs tragende Platine aufweisen können. LED steht dabei für lichtemittierende Diode. Es ist klar, dass grundsätzlich auch sogenannte OLEDs umfasst sein können, wobei OLED für organische LED steht.

Problematisch bei LED-Lampen ist die während des Betriebs entstehende Wärme. Diese muss abgeführt werden, um die thermische Belastung der LEDs sowie einer gegebenenfalls in die LED-Lampe integrierten Leistungselektronik zu reduzieren, da sich die thermische Belastung derartiger elektronischer Bauteile signifikant auf deren Lebensdauer auswirkt. Um die Wärme von der jeweiligen Platine abzuführen, können derartige LED-Lampen mit einem Träger aus Metall ausgestattet sein, an dem die jeweilige Platine möglichst flächig zur Anlage kommt. Der metallische Träger kann dabei effizient Wärme von der Platine abziehen und aufnehmen sowie in die Umgebung abstrahlen.

Bei leistungsstarken LED-Lampen erzeugen die LEDs jedoch mehr Wärme als über den Träger abgestrahlt werden kann, so dass sich letztlich die gesamte LED-Lampe aufheizt, was zu einer unerwünschten thermischen Belastung der LED-Lampe bzw. deren elektronischen Komponenten führt.

Eine gattungsgemäße Leuchte ist aus der EP 2 767 748 A1 sowie aus der CN 203 442 630 U bekannt. Sie umfasst wenigstens eine stabförmige LED-Lampe, die einen länglichen Träger aus Metall und wenigstens eine an einer Vorderseite des Trägers befestigte, mehrere LEDs tragende Platine aufweist, und wenigstens eine längliche Konsole aus Metall, an deren Vorderseite eine Rückseite des Trägers anliegt. Die Konsole weist wenigstens zwei in einer Längsrichtung der Konsole voneinander beabstandete Haltebereiche auf, die jeweils eine in der Konsole ausgebildete Aussparung aufweisen, wobei die jeweilige Aussparung einen zur Vorderseite der Konsole offenen Einführabschnitt und einen in einer parallel zur Längsrichtung der Konsole verlaufenden Einschieberichtung an den Einführabschnitt anschließenden Halteabschnitt aufweist, der zur Vorderseite der Konsole hin durch einen an der Konsole ausgebildeten Haltesteg begrenzt ist. Die LED-Lampe weist an der Rückseite des Trägers wenigstens zwei in einer Längsrichtung der LED-Lampe voneinander beabstandete Halteklammern auf, die zur Montage der LED-Lampe an der Konsole jeweils in einem der Haltebereiche in einer senkrecht zur Längsrichtung der Konsole verlaufenden Ansteckrichtung in den jeweiligen Einführabschnitt einführbar und darin in der Einschieberichtung in den Halteabschnitt verschiebbar sind, in dem sich die jeweilige Halteklammer im montierten Zustand am jeweiligen Haltesteg abstützt und die LED-Lampe in der Ansteckrichtung gegen die Konsole vorspannt.

Die vorliegende Erfindung beschäftigt sich mit dem Problem, für eine Leuchte der vorstehend beschriebenen Art eine verbesserte Ausführungsform anzugeben, die sich insbesondere durch ein verbessertes Wärmemanagement auszeichnet, wobei vorzugsweise eine Reduzierung der thermischen Belastung der verwendeten LED-Lampen im Vordergrund steht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Leuchte mit wenigstens einer Konsole auszustatten, die aus einem Metall bzw. aus einer Metalllegierung hergestellt ist. Die Konsole dient dabei zur Befestigung der jeweiligen LED-Lampe, wobei dies derart erfolgt, dass eine Rückseite des metallischen Trägers an einer Vorderseite der metallischen Konsole zur Anlage kommt. Durch diesen körperlichen Kontakt zwischen Träger und Konsole lässt sich eine effiziente Wärmeübertragung zwischen Träger und Konsole realisieren, wodurch im Betrieb der Leuchte die Wärme effizient vom jeweiligen Träger über die Konsole abgeführt werden kann. Somit lässt sich die thermische Belastung der jeweiligen LED-Lampe reduzieren. Zweckmäßig liegt dabei ein möglichst großflächiger Kontakt zwischen der Vorderseite der Konsole und der Rückseite des Trägers vor. Durch die längliche Ausgestaltung der Konsole kann über einen großen Bereich der LED-Lampe die Wärme effizient abgeführt werden. Beispielsweise beträgt die Länge der Konsole mindestens 50 % der Länge der LED-Lampe.

Der Begriff "länglich" bedeutet im vorliegenden Zusammenhang, dass eine Längserstreckung des jeweiligen länglichen Bauteils größer ist als eine quer zur Längserstreckung gemessene Breite sowie eine quer zur Längserstreckung und quer zur Breite gemessene Höhe des jeweiligen Bauteils. Insbesondere ist die Länge des Bauteils dabei mindestens so doppelt so groß, vorzugsweise mindestens zehn Mal größer, als die Breite sowie die Höhe des Bauteils.

Gemäß einer vorteilhaften Ausführungsform kann die Konsole wenigstens zwei in einer Längsrichtung der Konsole voneinander beanstandete Haltebereiche aufweisen, die jeweils eine in der Konsole ausgebildete Aussparung umfassen. Die jeweilige Aussparung weist einen zur Vorderseite der Konsole offenen Einführabschnitt und distal zur Vorderseite der Konsole einen in einer parallel zur Längsrichtung der Konsole verlaufenden Einschieberichtung an den Einführabschnitt anschließenden Halteabschnitt auf, der zur Vorderseite der Konsole hin durch einen an der Konsole ausgebildeten Haltesteg begrenzt ist. Korrespondierend zu den Haltebereichen ist die LED-Lampe vorzugsweise an der Rückseite des Trägers mit wenigstens zwei Halteklammern ausgestattet, die in einer Längsrichtung der LED-Lampe voneinander beabstandet sind. Der Längsabstand zwischen den beiden Halteklammern ist dabei gleich groß wie der Längsabstand zwischen den beiden Haltebereichen. Ferner sind die Halteklammern und die Haltebereich bzw. die zugehörigen Aussparungen so aufeinander abgestimmt, dass zur Montage der LED-Lampe an der Konsole die jeweilige Halteklammer im zugehörigen Haltebereich in einer senkrecht zur Längsrichtung der Konsole verlaufenden Ansteckrichtung in den jeweiligen Einführabschnitt einführbar ist und darin in der Einschieberichtung in den Halteabschnitt verschiebbar ist, indem sich dann die jeweilige Halteklammer im montierten Zustand am jeweiligen Haltesteg abstützt, und zwar vorzugsweise derart, dass die jeweilige Halteklammer dabei die LED-Lampe in der Ansteckrichtung gegen die Konsole vorspannt. Die vorgeschlagenen Aussparungen in der Konsole ermöglichen in Verbindung mit den Halteklammern der LED-Lampe eine besonders einfache Montage der LED-Lampe an der Konsole. Ebenso wird die Demontage der LED-Lampe von der Konsole vereinfacht. Die Aussparungen und die Halteklammern ermöglichen eine werkzeuglose, zweistufige Montagebewegung, bei welcher die LED-Lampe zunächst in der Ansteckrichtung und anschließend in der Einschieberichtung bewegt wird. Anschließend ist die LED-Lampe entgegen der Ansteckrichtung durch einen Formschluss zwischen der jeweiligen Halteklammer und dem jeweiligen Haltesteg an der Konsole gesichert.

Wie erwähnt, erfolgt die Abstimmung zwischen den Halteklammern und den Haltebereichen bevorzugt derart, dass die Halteklammern im eingeschobenen Zustand eine parallel zur Ansteckrichtung orientierte Vorspannung zwischen der LED-Lampe und der Konsole erzeugen. Mit anderen Worten, die Halteklammern bewirken im montierten Zustand ein Andrücken des Trägers gegen die Konsole. Eine derartige druckbelastete Kontaktierung zwischen der Vorderseite der Konsole und der Rückseite des Trägers verbessert die Wärmeübertragung zwischen Träger und Konsole.

Gemäß einer anderen vorteilhaften Ausführungsform kann zumindest eine der Halteklammern durch eine Verrastung entgegen der Einschieberichtung an der Konsole gesichert sein. Die Verrastung verhindert somit ein Verschieben der LED-Lampe relativ zur Konsole entgegen der Einschieberichtung, wodurch die LED-Lampe sicher an der Konsole festgelegt ist. Zur Kompensierung von Herstellungstoleranzen reicht es dabei aus, wenn von zwei oder mehr Halteklammern nur eine einzige Halteklammer mittels einer derartigen Verrastung an der Konsole gesichert ist

Gemäß einer anderen vorteilhaften Ausführungsform kann zumindest ein solcher Haltebereich mit einer Verrastung ausgestattet sein, die im montierten Zustand die jeweilige Halteklammer am jeweiligen Haltesteg in einer der Einschieberichtung entgegengesetzten Ausschieberichtung fixiert. Auch hier ist eine Ausführungsform bevorzugt, bei der nur einer der Haltebereiche mit einer derartigen Verrastung ausgestattet ist. Die Integration der Verrastung in den jeweiligen Haltesteg führt zu einer besonders kompakten und effizienten Bauform.

Gemäß einer Weiterbildung kann die Verrastung wenigstens eine am Haltesteg ausgebildete Rastnase aufweisen, die in eine dazu komplementäre, an der Halteklammer ausgebildete Rastöffnung eingreift. Die federelastische Halteklammer kann beim Verschieben der LED-Lampe in der Einschieberichtung die Rastnase überfahren, dabei elastisch nachgeben und zurückfedern, wobei dann die jeweilige Rastnase in die jeweilige Rastöffnung eingreift.

Erfindungsgemäß weist der Träger an seiner Rückseite eine Längsnut auf, in welche die Konsole im montierten Zustand an ihrer Vorderseite eingreift. Das Vorsehen einer derartigen
Längsnut führt zu einem Formschluss zwischen Konsole und Träger, was eine sichere Fixierung der LED-Lampe an der Konsole begünstigt. Gleichzeitig wird dadurch die Wärmeübertragung zwischen Träger und Konsole verbessert. Zum einen kann bei entsprechenden Abmessungen mehr Kontaktfläche bereitgestellt werden. Zum anderen sind im Falle von Wärmestrahlung nur sehr kurze Wege bzw. Spalte zu überbrücken.

Gemäß einer Weiterbildung kann eine Nuttiefe der Längsnut kleiner sein als eine parallel zur Nuttiefe gemessene Steghöhe eines solchen Haltestegs. Durch diese Maßnahme ragt der jeweilige Haltesteg parallel zur Ansteckrichtung aus der Längsnut heraus und steht dadurch über die Rückseite des Trägers vor. Durch diese Maßnahme lässt sich besonders einfach eine Vorspannung in der Ansteckrichtung zwischen Konsole und Träger mit Hilfe der jeweiligen Halteklammer erzeugen bzw. übertragen.

Bei der Erfindung weist die jeweilige Halteklammer an der Rückseite des Trägers seitlich über die Längsnut überstehende, manuell betätigbare Betätigungsabschnitte auf. Durch diese überstehenden Betätigungsabschnitte lässt sich die Halteklammer besonders einfach manuell verstellen, beispielsweise um die vorstehend genannte Verrastung zu lösen. Wie gesagt handelt es sich bei der Halteklammer um ein federelastisches Bauteil, das zum einen die Vorspannung zwischen Träger und Konsole ermöglicht, das zum anderen für die Verrastung federelastisch beweglich ist und das schließlich zum Lösen der Verrastung ebenfalls federelastisch beweglich ist.

Gemäß einer speziellen Ausführungsform kann die Konsole im Querschnitt, also quer zu ihrer Längsrichtung ein im Wesentlichen U-förmiges Profil aufweisen, das zwei U-Schenkel, eine die beiden U-Schenkel miteinander verbindende U-Basis und zwei Montageleisten aufweist, die jeweils distal von der U-Basis von einem der U-Schenkel abgewinkelt sind. Die Montageleisten dienen dabei zum Befestigen der Konsole an einer Wand oder Decke oder an einem Gehäuse der Leuchte. Die U-Basis befindet sich dabei an der Vorderseite der Konsole, während sich die Montageleisten an einer Rückseite der Konsole befinden.

Gemäß einer vorteilhaften Weiterbildung ist das Querschnittsprofil der Konsole so gewählt, dass die U-Basis in die Längsnut des Trägers eintaucht. Die U-Basis weist die Kontaktfläche der Konsole auf. Ein Nutgrund der Längsnut weist dagegen die Kontaktfläche des Trägers auf. Durch das Eintauchen der U-Basis in die Längsnut kann insbesondere eine besonders großflächige Kontaktierung zwischen Konsole und Träger erreicht werden.

Gemäß einer anderen vorteilhaften Ausführungsform kann der jeweilige Haltesteg im Querschnitt durch die U-Basis und durch Abschnitte der U-Schenkel gebildet sein. Somit ist der jeweilige Haltesteg zweckmäßig integral an der Konsole ausgeformt.

Bei einer anderen Ausführungsform kann die Konsole ein Blechformteil sein, das aus einem einzigen Blechkörper hergestellt ist. Ein derartiges Blechformteil lässt sich besonders einfach durch einen oder mehrere Stanz- und/oder Biegevorgänge besonders preiswert herstellen. Das Blechformteil kann dabei besonders preiswert als Eisenlegierung oder zur verbesserten Wärmeabführung aus einer Leichtmetalllegierung hergestellt sein.

Beim Träger der jeweiligen LED-Lampe handelt es sich bevorzugt um ein Strangpressprofil oder um ein Extrusionsprofil. Derartige Profile lassen sich besonders preiswert herstellen. Bevorzugt ist der Träger aus einer Leichtmetalllegierung hergestellt, um die Wärmeübertragung zu verbessern.

Gemäß einer anderen Ausführungsform kann die Konsole mit ihrer Rückseite an einem Gehäuseboden eines Leuchtengehäuses anliegen, das die jeweilige Konsole und die jeweilige LED-Lampe umschließt. Dementsprechend umfasst die Leuchte ein Leuchtengehäuse, in dem sowohl die jeweilige Konsole als auch die jeweilige LED-Lampe angeordnet sind. Durch Befestigen der Konsole am Leuchtengehäuse lässt sich eine vormontierbare Baugruppe realisieren. Die Dimensionierung des Leuchtengehäuses kann ohne Weiteres so erfolgen, dass entweder nur eine einzige Konsole für eine einzige LED-Lampe darin untergebracht werden kann oder dass zwei oder mehr Konsolen nebeneinander und/oder hintereinander mit einer entsprechenden Anzahl an LED-Lampen darin untergebracht werden können.

Zweckmäßig kann das Leuchtengehäuse gegenüber dem Gehäuseboden mit einer lichtdurchlässigen Abdeckung ausgestattet sein. Die Abdeckung ist zweckmäßig vom Gehäuse abnehmbar, so dass durch eine dem Gehäuseboden gegenüberliegende Gehäuseöffnung die jeweilige LED-Lampe zugänglich ist, beispielsweise für einen Lampenwechsel.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Längsschnitt einer Leuchte im montierten Zustand,
- Fig. 2: einen Längsschnitt der Leuchte beim Montagevorgang,
- Fig. 3: einen Querschnitt der Leuchte im Bereich einer LED-Lampe im montierten Zustand,
- Fig. 4: einen Querschnitt wie in Fig. 3, während eines Montagevorgangs,
- Fig. 5: ein vergrößertes Detail V aus Fig. 2 während des Montagevorgangs,
- Fig. 6: ein vergrößertes Detail VI aus Fig. 1 nach dem Montagevorgang,
- Fig. 7: eine Ansicht von unten auf eine Leuchte,
- Fig. 8: eine isometrische Ansicht der Leuchte,
- Fig. 9: eine isometrische Ansicht eines Details IX aus Fig. 8,
- Fig. 10: einen Querschnitt der Leuchte im montierten Zustand,
- Fig. 11: einen Längsschnitt der Leuchte im montierten Zustand,
- Fig. 12: ein vergrößertes Detail XII aus Fig. 11,
- Fig. 13: ein vergrößertes Detail XIII aus Fig. 11,
- Fig. 14: eine Schnittansicht entsprechend den Schnittlinien XIV in Fig. 13,
- Fig. 15: eine isometrische Ansicht der Leuchte im Bereich einer Halteklammer.

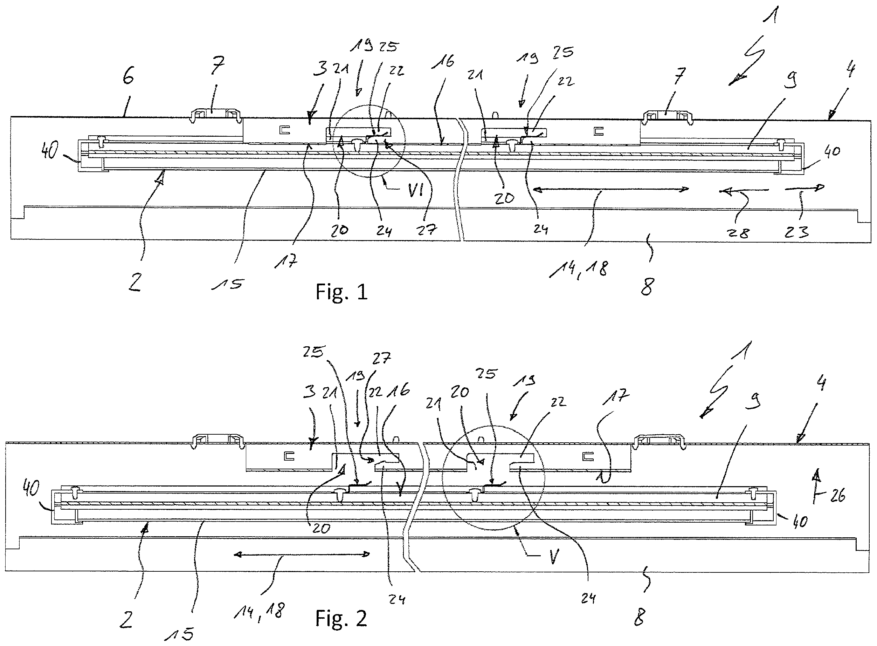

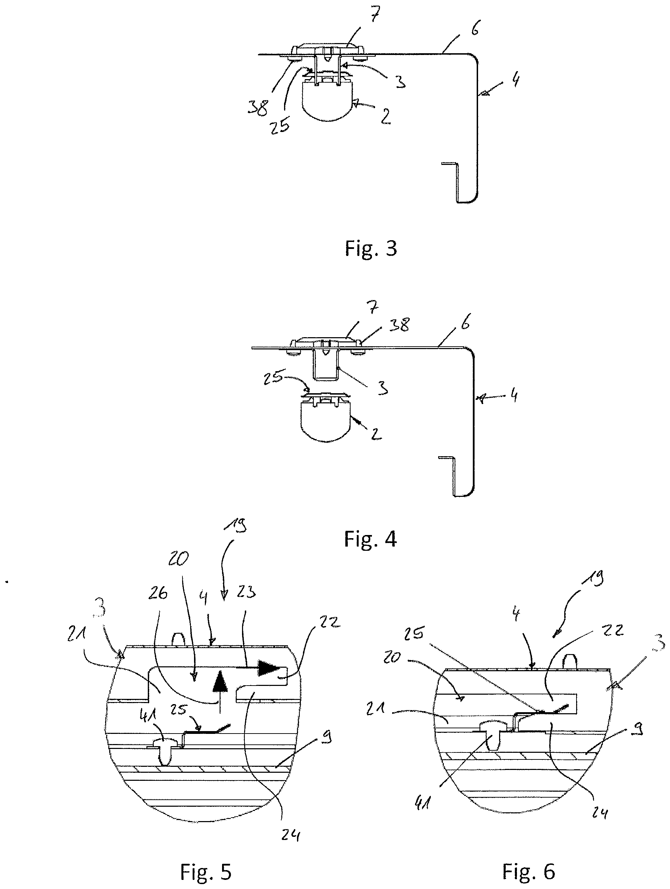

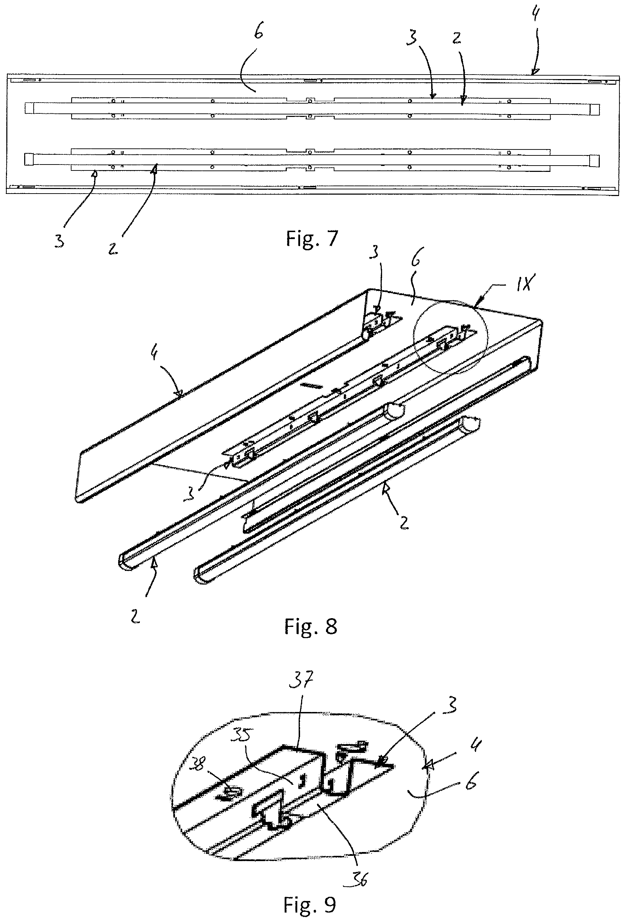

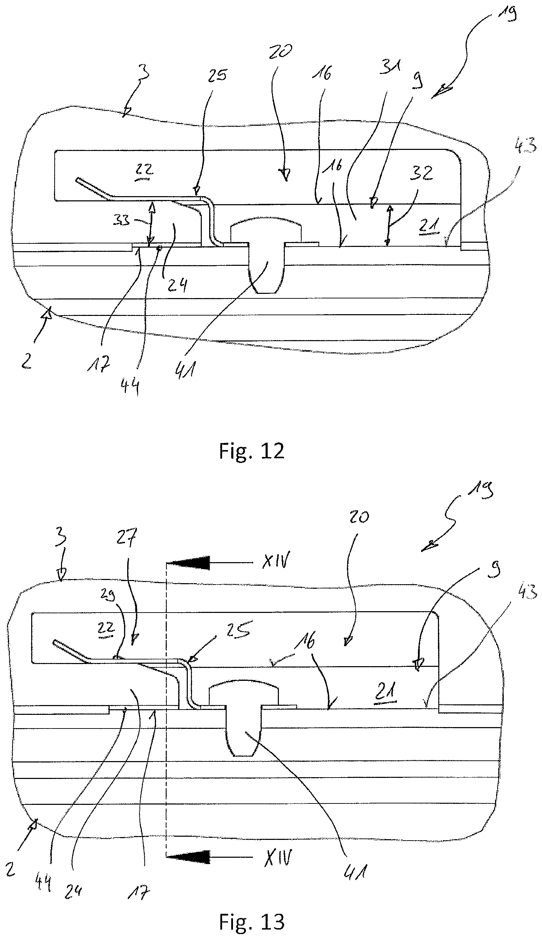

Entsprechend den Figuren 1 bis 15 umfasst eine Leuchte 1 zumindest eine stabförmige LED-Lampe 2 und wenigstens eine längliche Konsole 3. Beim gezeigten Beispiel umfasst die Leuchte 1 außerdem ein Leuchtengehäuse 4, das hier kastenförmig ist und so dimensioniert ist, dass die jeweilige Konsole 3 und die zugehörige LED-Lampe 2 darin untergebracht werden können. Das Gehäuse 4 ist im gezeigten Beispiel ferner so dimensioniert, dass darin zwei LED-Lampen 2 nebeneinander angeordnet werden können, wobei für jede LED-Lampe 2 eine separate Konsole 3 vorgesehen ist.

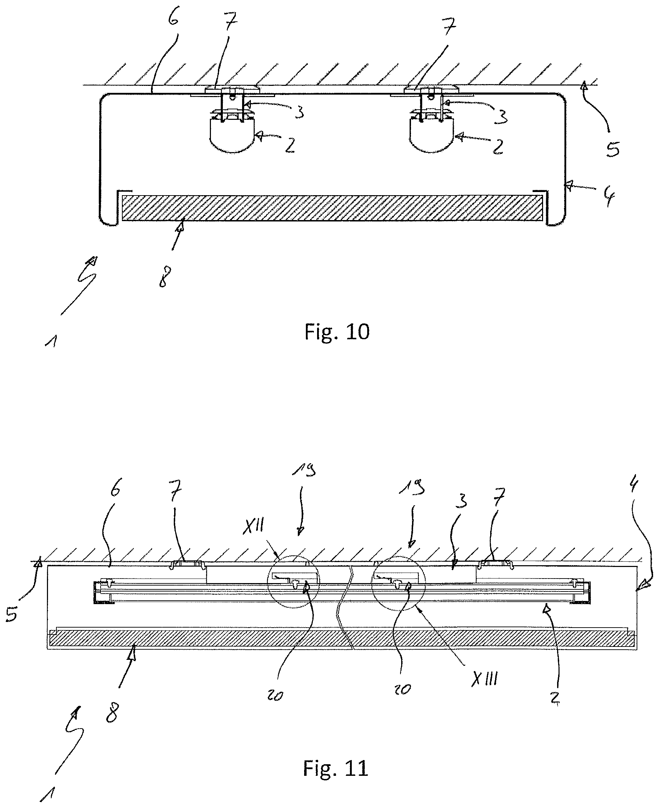

Das Leuchtengehäuse 4 ist zur Montage an einer Wand oder Decke 5 vorgesehen, wie in den Figuren 10 und 11 angedeutet ist. Hierzu kann beispielsweise ein Gehäuseboden 6 mit Verbindungselementen 7 ausgestattet sein, die eine Verschraubung oder dergleichen mit der Wand oder Decke 5 ermöglichen. Die Verbindungselemente 7 können mit dem Gehäuseboden 6 verclipst sein. Das Leuchtengehäuse 4 weist hier gegenüber seinem Gehäuseboden 6 eine Abdeckung 8 auf, die für Licht durchlässig ist, das von der jeweiligen LED-Lampe 2 abgestrahlt wird. Die Abdeckung 8 kann dabei als Diffusor und/oder als Reflektor oder dergleichen ausgestaltet sein.

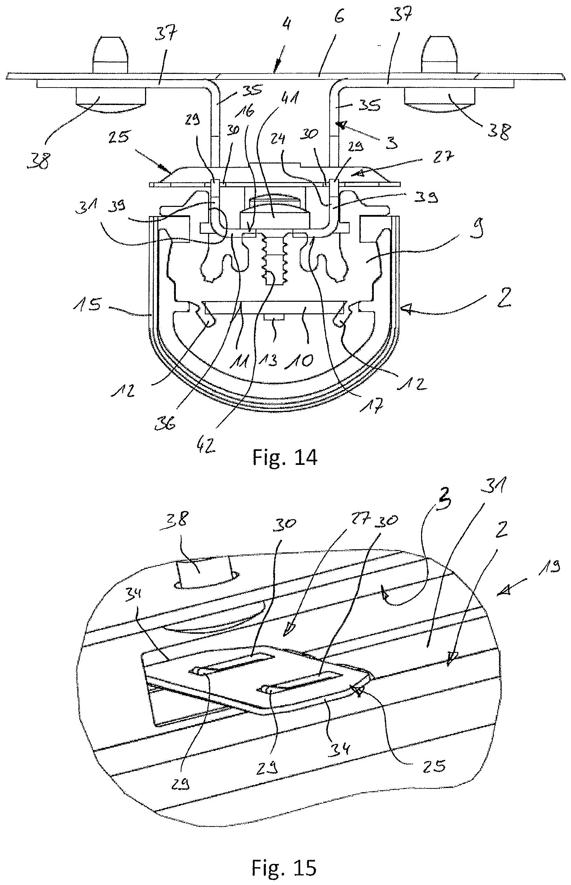

Die jeweilige LED-Lampe 2 weist einen länglichen Träger 9 aus Metall sowie wenigstens eine Platine 10 auf, die in Figur 14 erkennbar ist. Die Platine 10 ist dabei an einer Vorderseite 11 des Trägers 9 befestigt, beispielsweise mittels umgebogener Stege 12, die integral am Träger 9 ausgeformt sind. Die Platine 10 trägt mehrere LEDs 13, die zweckmäßig in einer Längsrichtung 14 der LED-Lampe 2 hintereinander in einer Reihe angeordnet sind. Optional kann die LED-Lampe 2 außerdem mit einer Abdeckung 15 aus Kunststoff ausgestattet sein, die am Träger 9 befestigt ist, zum Beispiel mittels einer Clipsverbindung, wobei die Abdeckung 15 die jeweilige Platine 10 an der Vorderseite 11 des Trägers 9 abdeckt.

Die Konsole 3 trägt die LED-Lampe 2, und zwar so, dass eine Rückseite 16 des Trägers 9 möglichst flächig an einer Vorderseite 17 der Konsole 3 anliegt. Die Konsole 3 weist außerdem zumindest zwei in einer Längsrichtung 18 der Konsole 3 voneinander beabstandete Haltebereiche 19 auf, in denen jeweils eine Aussparung 20 in der Konsole 3 ausgebildet ist. Die Längsrichtung 18 der Konsole 3 fällt in den gezeigten Darstellungen mit der Längsrichtung 14 der LED-Lampe 2 zusammen. Die jeweilige Aussparung 20 weist dabei einen zur Vorderseite 17 der Konsole 3 offenen Einführabschnitt 21 und distal zur Vorderseite 17 einen Halteabschnitt 22 auf, der in einer Einschieberichtung 23, die sich parallel zur Längsrichtung 18 der Konsole 3 erstreckt, an den Einführabschnitt 21 anschließt. Dieser Halteabschnitt 22 ist nun zur Vorderseite 17 der Konsole 3 hin durch einen Haltesteg 24 begrenzt, der an der Konsole 3 integral ausgebildet ist.

Die jeweilige LED-Lampe 2 weist an der Rückseite 16 des Trägers 9 zumindest zwei Halteklammern 25 auf, die in der Längsrichtung 14 der LED-Lampe 2 voneinander beabstandet sind. Zweckmäßig ist je Haltebereich 19 eine solche Halteklammer 25 vorgesehen. Zur Montage der LED-Lampe 2 an der Konsole 3 lässt sich die jeweilige Halteklammer 25 in einem der Haltebereiche 19 in einer Ansteckrichtung 26, die sich senkrecht zur Längsrichtung 18 der Konsole 3 erstreckt, in den jeweiligen Einführabschnitt 21 einführen und im eingeführten Zustand darin in der Einschieberichtung 23 in den Halteabschnitt 22 verschieben. Ist die Halteklammer 25 in den jeweiligen Halteabschnitt 22 eingeschoben, liegt der montierte Zustand vor, in dem sich die jeweilige Halteklammer 25 am zugehörigen Haltesteg 24 abstützt. Zweckmäßig kann die jeweilige Halteklammer 25 dabei die LED-Lampe 2 in der Ansteckrichtung 26 gegen die Konsole 3 vorspannen.

Vorteilhaft ist zwischen der jeweiligen Lampe 2 und der zugehörigen Konsole 3 zumindest eine Verrastung 27 vorgesehen, die im montierten Zustand, also bei in den Haltebereich 22 eingeschobener Halteklammer 25 aktiviert ist und die eine Sicherung der Lampe 2 an der Konsole 3 entgegen der Einschieberichtung 23, also in einer entgegengesetzten Ausschieberichtung 28 sichert. Zweckmäßig wirkt die Verrastung 27 dabei mit einer solchen Halteklammer 25 zusammen. Insbesondere ist einer der Haltebereiche 19 mit einer solchen Verrastung 27 ausgestattet. Im Beispiel erfolgt die Fixierung bzw. Sicherung der Lampe 2 an der Konsole 3 durch eine Fixierung der jeweiligen Halteklammer 25 am zugehörigen Haltesteg 24. Hierzu kann die Verrastung 27 zumindest eine am Haltesteg 24 ausgebildete Rastnase 29 aufweisen, die in eine dazu komplementäre Rastöffnung 30 eingreift, die hierzu an der Halteklammer 25 ausgebildet ist. Im gezeigten Beispiel umfasst die jeweilige Verrastung 27 zwei derartige Rastnasen 29, die in zwei separate Rastöffnungen 30 eingreifen, die beide an derselben Halteklammer 25 ausgebildet sind.

Wie sich insbesondere den Figuren 14 und 15 entnehmen lässt, weist der Träger 9 an seiner Rückseite 16 eine Längsnut 31 auf, die sich parallel zur Längsrichtung 14 der LED-Lampe 2 erstreckt. Die Konsole 3 ist nun so ausgestaltet, dass sie im montierten Zustand an ihrer Vorderseite 17 in die Längsnut 31 des Trägers 9 eingreift und dabei die Rückseite 16 des Trägers 9 innerhalb der Längsnut 31 an einem Nutgrund 43 in einem Kontaktbereich 44 kontaktiert. Hierzu ist eine Nuttiefe 32 im Kontaktbereich 44 kleiner dimensioniert als eine parallel dazu gemessene Steghöhe 33 eines solchen Haltestegs 24. Hierdurch steht der Haltesteg 24 geringfügig über die Rückseite 16 des Trägers 9 über. Bei entsprechender Dimensionierung der Halteklammer 25 kann dies zu einem Aufbiegen der Halteklammer 25 führen, wodurch diese federelastisch verformt ist und eine entsprechende Vorspannung zwischen Träger 9 und Konsole 3 übertragen kann, die eine Anpresskraft zwischen der Rückseite 16 des Trägers 9 und der Vorderseite 17 der Konsole 3 bewirkt.

Figur 15 lässt sich entnehmen, dass die Halteklammer 25 zwei manuell betätigbare Betätigungsabschnitte 34 aufweisen kann, die an der Rückseite 16 des Trägers 9 seitlich über die Längsnut 31 überstehen. Durch entsprechende Manipulation dieser Betätigungsabschnitte 34 lässt sich die Halteklammer 25 so weit anheben, dass die Verrastung 27 gelöst ist.

Wie sich insbesondere Figur 14 entnehmen lässt, weist die Konsole 3 im Querschnitt zweckmäßig ein im Wesentlichen U-förmiges Profil auf, wobei dieses U-Profil zwei U-Schenkel 35, eine die beiden U-Schenkel 35 miteinander verbindende U-Basis 36 sowie zwei Montageleisten 37 umfasst. Die Montageleisten 37 sind beabstandet von der U-Basis 36 an je einem der U-Schenkel 35 seitlich nach außen abgewinkelt. Die Montageleisten 37 liegen im montierten Zustand flächig am Gehäuseboden 6 an und dienen zur Befestigung der Konsole 3 am Leuchtengehäuse 4. Im Beispiel sind hierzu entsprechende Befestigungselemente 38 vorgesehen, bei denen es sich zum Beispiel um Schraubverbindungen oder Clipverbindungen handeln kann. Erkennbar ist die Konsole 3 so profiliert, dass die U-Basis 36 in die Längsnut 31 eintaucht. Ferner sind in den Haltebereichen 19 die Aussparungen 20 so ausgebildet, dass der jeweilige Haltesteg 24 im Querschnitt durch die U-Basis 36 und durch Abschnitte 39 der U-Schenkel 35 gebildet ist. Die Konsole 3 lässt sich besonders preiswert als Blechformteil realisieren, das aus einem einzigen Blechkörper hergestellt ist. Im Unterschied dazu ist der Träger 9 bevorzugt als Strangpressprofil konzipiert.

Für die Montage der LED-Lampe 2 an der Konsole 3 werden zunächst die LED-Lampe 2 und die Konsole 3 parallel zueinander ausgerichtet. Ferner werden die Halteklammern 25 gegenüber den Haltebereichen 19 positioniert, so dass diese zum jeweiligen Einführabschnitt 21 in der Ansteckrichtung 26 fluchten. Anschließend kann die LED-Lampe 2 in der Ansteckrichtung 26 an die Konsole 3 angesetzt werden, wobei einerseits die U-Basis 36 in die Längsnut 31 eintaucht, während andererseits die Halteklammern 25 durch die Einführabschnitte 21 in die jeweilige Aussparung 20 eintauchen. Anschließend lässt sich die LED-Lampe 2 in der Einschieberichtung 23 relativ zur Konsole 3 verschieben, wodurch die Halteklammern 25 in den jeweiligen Halteabschnitt 22 verschoben werden und dabei den jeweiligen Haltesteg 24 hintergreifen. Sobald die Verrastung 27 eingerastet ist, ist der Montagevorgang beendet. Die LED-Lampe 2 ist dann hinreichend fest an der Konsole 3 fixiert. Für die elektrische Verbindung der jeweiligen LED-Lampe 2 mit einer hier nicht gezeigten elektrischen Energieversorgung können entsprechende elektrische Leitungen vorgesehen sein, die beispielsweise über eine von zwei Endkappen 40 der LED-Lampe 2 hindurchgeführt sein können.

Die jeweilige Halteklammer 25 ist am Träger 9 beispielsweise mittels einer Schraube 41 befestigt, die in einen Schraubkanal 42 eingeschraubt ist, der im Profil des Trägers 9 ausgeformt ist.

## Patentansprüche

1. Leuchte zur Wand- oder Deckenmontage,
- mit wenigstens einer stabförmigen LED-Lampe (2), die einen länglichen Träger (9) aus Metall und wenigstens eine an einer Vorderseite (11) des Trägers (9) befestigte, mehrere LEDs (13) tragende Platine (10) aufweist,
- mit wenigstens einer länglichen Konsole (3) aus Metall, an deren Vorderseite (17) eine Rückseite (16) des Trägers (9) anliegt,
- wobei die Konsole (3) wenigstens zwei in einer Längsrichtung (18) der Konsole (3) voneinander beabstandete Haltebereiche (19) aufweist, die jeweils eine in der Konsole (3) ausgebildete Aussparung (20) aufweisen,
- wobei die jeweilige Aussparung (20) einen zur Vorderseite (17) der Konsole (3) offenen Einführabschnitt (21) und einen in einer parallel zur Längsrichtung (18) der Konsole (3) verlaufenden Einschieberichtung (23) an den Einführabschnitt (21) anschließenden Halteabschnitt (22) aufweist, der zur Vorderseite (17) der Konsole (3) hin durch einen an der Konsole (3) ausgebildeten Haltesteg (24) begrenzt ist,
- wobei die LED-Lampe (2) an der Rückseite (16) des Trägers (9) wenigstens zwei in einer Längsrichtung (14) der LED-Lampe (2) voneinander beabstandete Halteklammern (25) aufweist, die zur Montage der LED-Lampe (2) an der Konsole (3) jeweils in einem der Haltebereiche (19) in einer senkrecht zur Längsrichtung (18) der Konsole (3) verlaufenden Ansteckrichtung (26) in den jeweiligen Einführabschnitt (21) einführbar und darin in der Einschieberichtung (23) in den Halteabschnitt (22) verschiebbar sind, in dem sich die jeweilige Halteklammer (25) im montierten Zustand am jeweiligen Haltesteg (24) abstützt und die LED-Lampe (2) in der Ansteckrichtung (26) gegen die Konsole (3) vorspannt,
**dadurch gekennzeichnet,**
- **dass** der Träger (9) an seiner Rückseite (16) eine Längsnut (31) aufweist, in welche die Konsole (3) im montierten Zustand an ihrer Vorderseite (17) eingreift,
- **dass** die jeweilige Halteklammer (25) an der Rückseite (16) des Trägers (9) seitlich über die Längsnut (31) überstehende Betätigungsabschnitte (34) aufweist.

2. Leuchte nach Anspruch 1,
**dadurch gekennzeichnet,**
**dass** zumindest eine der Halteklammern (25) durch eine Verrastung (27) entgegen der Einschieberichtung (23) an der Konsole (3) gesichert ist.

3. Leuchte nach Anspruch 1 oder 2,
**dadurch gekennzeichnet,**
**dass** zumindest ein solcher Haltebereich (19) mit einer Verrastung (27) ausgestattet ist, die im montierten Zustand die jeweilige Halteklammer (25) am jeweiligen Haltesteg (24) in einer der Einschieberichtung (23) entgegengesetzten Ausschieberichtung (28) fixiert.

4. Leuchte nach Anspruch 3,
**dadurch gekennzeichnet,**
**dass** die Verrastung (27) wenigstens eine am Haltesteg (24) ausgebildete Rastnase (29) aufweist, die in eine dazu komplementäre, an der Halteklammer (25) ausgebildete Rastöffnung (30) eingreift.

5. Leuchte nach einem der Ansprüche 1 bis 4,
**dadurch gekennzeichnet,**
**dass** eine Nuttiefe (32) der Längsnut (31) kleiner ist als eine parallel zur Nuttiefe (32) gemessene Steghöhe (33) eines solchen Haltestegs (24).

6. Leuchte nach einem der Ansprüche 1 bis 5,
**dadurch gekennzeichnet,**
**dass** die Konsole (3) im Querschnitt ein im Wesentlichen U-förmiges Profil aufweist, das zwei U-Schenkel (35), eine die beiden U-Schenkel (35) miteinander verbindende U-Basis (36) und zwei Montageleisten (37) aufweist, die jeweils distal zur U-Basis (36) von einem der U-Schenkel (35) abgewinkelt sind.

7. Leuchte nach Anspruch 6,
**dadurch gekennzeichnet,**
**dass** die U-Basis (36) in die Längsnut (31) eintaucht.

8. Leuchte nach Anspruch 6 oder 7,
**dadurch gekennzeichnet,**
**dass** der jeweilige Haltesteg (24) im Querschnitt durch die U-Basis (36) und Abschnitte (39) der U-Schenkel (35) gebildet ist.

9. Leuchte nach einem der Ansprüche 1 bis 8,
**dadurch gekennzeichnet,**
**dass** die Konsole (3) ein Blechformteil ist, das aus einem einzigen Blechkörper hergestellt ist.

10. Leuchte nach einem der Ansprüche 1 bis 9,
**dadurch gekennzeichnet,**
**dass** der Träger (9) ein Strangpressprofil oder Extrusionsprofil ist.

11. Leuchte nach einem der Ansprüche 1 bis 10,
**dadurch gekennzeichnet,**
**dass** die Konsole (3) mit ihrer Rückseite an einem Gehäuseboden (6) eines Leuchtengehäuses (4) anliegt, das die Konsole (3) und die LED-Lampe (2) umschließt.

12. Leuchte nach Anspruch 11,
**dadurch gekennzeichnet,**
**dass** das Leuchtengehäuse (4) gegenüber dem Gehäuseboden (6) eine lichtdurchlässige Abdeckung (8) aufweist.

## Claims

1. Light for mounting on a wall or ceiling,
- with at least one bar-shaped LED lamp (2) comprising an elongated carrier (9) made of metal and at least one circuit board (10) mounted at a front side (11) of the carrier (9) and carrying a plurality of LEDs (13),
- with at least one elongated console (3) made of metal at the front side (17) of which abuts a rear side (16) of the carrier (9),
- wherein the console (3) comprises at least two holding areas (19) spaced apart from each other in a longitudinal direction (18) of the console (3), the holding areas each comprising a recess (20) formed in the console (3),
- wherein each respective recess (20) comprises an insertion section (21) which is open to the front side (17) of the console (3) and a retaining section (22) bordering the insertion section (21) in an insertion direction (23) running parallel to the longitudinal direction (18) of the console (3), the retaining section being bounded to the front side (17) of the console (3) by a holding bar (24) formed on the console (3),
- wherein the LED lamp (2) comprises at the rear side (16) of the carrier (9) at least two holding clamps (25) spaced apart from each other in a longitudinal direction (14) of the LED lamp (2), which, for mounting the LED lamp (2) on the console (3), can each be inserted into the respective insertion section (21) in one of the holding areas (19) in an insertion direction (26) running perpendicular to the longitudinal direction (18) of the console (3), and are moveable in the insertion section in the insertion direction (23) into the retaining section (22) in which the respective holding clamp (25), when mounted, is supported by the respective holding bar (24) and preloads the LED lamp (2) in the insertion direction (26) against the console (3),
**characterised in that**
- the carrier (9) comprises a longitudinal groove (31) at the rear side (16) into which the console (3), when mounted, engages at its front side (17),
- the respective holding clamp (25) comprises at the rear side (16) of the carrier (9) actuation sections (34) laterally protruding beyond the longitudinal groove (31).

2. Light according to claim 1,
**characterised in that**
at least one of the holding clamps (25) is secured on the console (3) by a locking (27) in the opposite direction of the insertion direction (23).

3. Light according to claim 1 or 2,
**characterised in that**
at least one such holding area (19) is provided with a locking (27) which, when mounted, secures the respective holding clamp (25) on the respective holding bar (24) in a sliding direction (28) opposite to the insertion direction (23).

4. Light according to claim 3,
**characterised in that**
the locking (27) comprises at least one locking catch (29) formed on the holding bar (24) which engages in a locking opening (30) complementary to the locking catch and formed on the holding clamp (25).

5. Light according to any of claims 1 to 4,
**characterised in that**
a groove depth (32) of the longitudinal groove (31) is smaller than a bar height (33) of such a holding bar (24) measured parallel to the groove depth (32).

6. Light according to any of claims 1 to 5,
**characterised in that**
the console (3) comprises in cross-section a substantially U-shaped profile comprising two U-thighs (35), a U-basis (36) connecting the two U-thighs (35) and two mounting rails (37), which are each disposed at an angle of one of the U-thighs (35) distal to the U-basis (36).

7. Light according to claim 6,
**characterised in that**
the U-basis (36) immerses into the longitudinal groove (31).

8. Light according to claim 6 or 7,
**characterised in that**
the respective holding bar (24) is formed in cross-section by the U-basis (36) and sections (39) of the U-thighs (35).

9. Light according to any of claims 1 to 8,
**characterised in that**
the console (3) is a sheet metal part made of a single metal body.

10. Light according to any of claims 1 to 9,
**characterised in that**
the carrier (9) is an extruded profile or extrusion profile.

11. Light according to any of claims 1 to 10,
**characterised in that**
the console (3) rests with the rear side on the housing base (6) of a light housing (4) which encloses the console (3) and the LED lamp (2).

12. Light according to claim 11,
**characterised in that**
the light housing (4) opposite the housing base (6) comprises a transparent cover (8).

## Revendications

1. Luminaire destiné à être monté au mur ou au plafond,
- avec au moins une lampe à DEL (2) en forme de barre, qui présente un support (9) allongé en métal et au moins une platine (10) fixée au niveau d'un côté avant (11) du support (9), supportant plusieurs DEL (13),
- avec au moins une console (3) allongée en métal, au niveau du côté avant (17) de laquelle repose un côté arrière (16) du support (9),
- dans lequel la console (3) présente au moins deux zones de maintien (19) espacées l'une de l'autre dans une direction longitudinale (18) de la console (3), lesquelles présentent respectivement un évidement (20) réalisé dans la console (3),
- dans lequel l'évidement (20) respectif présente une section d'introduction (21) ouverte en direction du côté avant (17) de la console (3) et une section de maintien (22) se raccordant à la section d'introduction (21) dans une direction d'introduction par glissement (23) s'étendant de manière parallèle par rapport à la direction longitudinale (18) de la console (3), laquelle section de maintien est délimitée, en direction du côté avant (17) de la console (3), par une entretoise de maintien (24) réalisée au niveau de la console (3),
- dans lequel la lampe à DEL (2) présente, au niveau du côté arrière (16) du support (9), au moins deux agrafes de maintien (25) espacées l'une de l'autre dans une direction longitudinale (14) de la lampe à DEL (2), lesquelles agrafes de maintien peuvent être introduites, aux fins du montage de la lampe à DEL (2) au niveau de la console (3), respectivement dans une des zones de maintien (19), dans une direction d'emboîtement (26) s'étendant de manière perpendiculaire par rapport à la direction longitudinale (18) de la console (3), dans la section d'introduction (21) respective et peuvent y être coulissées dans la direction d'introduction par glissement (23) dans la section de maintien (22), dans laquelle l'agrafe de maintien (25) respective prend appui dans l'état monté au niveau de l'entretoise de maintien (24) respective et précontraint la lampe à DEL (2) dans la direction d'emboîtement (26) contre la console (3),
**caractérisé en ce**
- **que** le support (9) présente, au niveau de son côté arrière (16), une rainure longitudinale (31), avec laquelle la console (3) vient en prise dans l'état monté au niveau de son côté avant (17),
- **que** l'agrafe de maintien (25) respective présente, au niveau du côté arrière (16) du support (9), des sections d'actionnement (34) dépassant latéralement la rainure longitudinale (31).

2. Luminaire selon la revendication 1,
**caractérisé en ce**
**qu'**au moins une des agrafes de maintien (25) est bloquée au niveau de la console (3) par un enclenchement (27) dans le sens opposé à la direction d'introduction par glissement (23).

3. Luminaire selon la revendication 1 ou 2,
**caractérisé en ce**
**qu'**au moins une zone de maintien (19) de ce type est équipée d'un enclenchement (27), qui fixe, dans l'état monté, l'agrafe de maintien (25) respective au niveau de l'entretoise de maintien (24) respective dans une direction de sortie par glissement (28) opposée à la direction d'introduction par glissement (23).

4. Luminaire selon la revendication 3,
**caractérisé en ce**
**que** l'enclenchement (27) présente au moins un ergot d'encliquetage (29) réalisé au niveau de l'entretoise de maintien (24), lequel vient en prise avec une ouverture d'encliquetage (30) complémentaire à celui-ci, réalisée au niveau de l'agrafe de maintien (25).

5. Luminaire selon l'une quelconque des revendications 1 à 4,
**caractérisé en ce**
**qu'**une profondeur de rainure (32) de la rainure longitudinale (31) est plus petite qu'une hauteur d'entretoise (33), mesurée de manière parallèle par rapport à la profondeur de rainure (32), d'une entretoise de maintien (24) de ce type.

6. Luminaire selon l'une quelconque des revendications 1 à 5,
**caractérisé en ce**
**que** la console (3) présente, dans la section transversale, un profil sensiblement en forme de U, qui présente deux branches en U (35), une base en U (36) reliant entre elles les deux branches en U (35), et deux baguettes de montage (37), qui sont coudées respectivement distalement par rapport à la base en U (36) par rapport à l'une des branches en U (35).

7. Luminaire selon la revendication 6,
**caractérisé en ce**
**que** la base en U (36) s'enfonce dans la rainure longitudinale (31).

8. Luminaire selon la revendication 6 ou 7,
**caractérisé en ce**
**que** l'entretoise de maintien (24) respective est formée, dans la section transversale, par la base en U (36) et par des sections (39) des branches en U (35).

9. Luminaire selon l'une quelconque des revendications 1 à 8,
**caractérisé en ce**
**que** la console (3) est une pièce moulée en tôle, qui est fabriquée à partir d'un corps de tôle unique.

10. Luminaire selon l'une quelconque des revendications 1 à 9,
**caractérisé en ce**
**que** le support (9) est un profil extrudé ou un profil d'extrusion.

11. Luminaire selon l'une quelconque des revendications 1 à 10,
**caractérisé en ce**
**que** la console (3) repose par son côté arrière au niveau d'un fond de boîtier (6) d'un boîtier de luminaire (4), qui renferme la console (3) et la lampe à DEL (2).

12. Luminaire selon la revendication 11,
**caractérisé en ce**
**que** le boîtier de luminaire (4) présente, par rapport au fond de boîtier (6), un cache (8) laissant passer la lumière.
